# EUROPÄISCHE PATENTANMELDUNG

(11) **EP 4 321 476 A1**
(43) Veröffentlichungstag der Anmeldung: **14.02.2024**
(21) Anmeldenummer: 22020383.0
(22) Anmeldetag: 10.08.2022
(51) Int. Cl.: C01B 3/04

(54) **VERFAHREN UND VORRICHTUNG ZUR WÄRMEVERBRAUCHENDEN HERSTELLUNG EINES PRODUKTS**

(71) Anmelder: Linde GmbH, 82049 Pullach (DE)
(72) Erfinder: Reinke, Michael, 82049 Pullach (DE); Peschel, Andreas, 82049 Pullach (DE)
(74) Vertreter: Fischer, Werner

(57) **Zusammenfassung**

Die Erfindung betrifft ein Verfahren zur wärmeverbrauchenden Herstellung eines Produkts (3), wobei Abwärme anfällt und ein unter Verwendung von Ammoniak gebildeter Brennstoff (17) verbrannt wird, um im Verfahren benötigte Wärme zu erzeugen. Kennzeichnend hierbei ist, dass zumindest ein Teil (5) des für die Bildung des Brennstoffs (17) vorgesehenen Ammoniaks unter Nutzung von Abwärme (H) einer katalytisch unterstützten Spaltreaktion unterzogen wird, um ein Wasserstoff und Stickstoff umfassendes Brenngas (7) zu erhalten, das den Brennstoff bildet oder mit wenigstens einem weiteren Stoff (16) zum Brennstoff (17) gemischt wird.

## Beschreibung

Die Erfindung betrifft ein Verfahren zur wärmeverbrauchenden Herstellung eines Produkts, wobei Abwärme anfällt und ein unter Verwendung von Ammoniak gebildeter Brennstoff verbrannt wird, um im Verfahren benötigte Wärme zu erzeugen.

Weiterhin betrifft die Erfindung eine Vorrichtung, die zur Durchführung des erfindungsgemäßen Verfahrens geeignet ist.

Als Abwärme gilt Wärme, die in dem Herstellungsverfahren als Nebenprodukt anfällt und die nach dem Stand der Technik entweder ohne wirtschaftlichen Nutzen in die Umwelt entlassen oder innerhalb oder außerhalb des Verfahrens beispielsweise zur Anwärmung von Einsatzstoffen verwendet wird.

Ein Beispiel für ein gattungsgemäßes Verfahren ist die Ammoniakspaltung, bei der Ammoniak unter Wärmezufuhr mit katalytischer Unterstützung in einem Spaltofen zerlegt wird. Insbesondere für große Leistungen sind die hierfür eingesetzten Spaltöfen ähnlich aufgebaut wie die aus dem Stand der Technik bekannten Dampfreformer. Sie besitzen einen Stahlmantel, der zur Wärmeisolierung mit einer feuerfesten Innenauskleidung versehen ist, die einen Feuerraum umschließt. Im Feuerraum sind mehrere Rohre (sog. Katalysatorrohre) angeordnet, deren innere Oberflächen katalytisch aktiv sind oder die ganz oder zumindest teilweise im Bereich des Feuerraums mit einer Schüttung aus einem Katalysatormaterial oder einer katalytisch aktiven strukturierten Packung gefüllt sind. Das zu spaltende Ammoniak wird in die Katalysatorrohre eingeleitet und dort in einer endothermen Reaktion in ein weitgehend aus Wasserstoff und Stickstoff bestehendes Spaltgas umgesetzt. Die für die Spaltreaktion benötigte Wärme wird gewöhnlich über zumindest einen Brenner bereitgestellt, der sein heißes Rauchgas in den Feuerraum entlässt. Lediglich ein Teil der im Rauchgas enthaltenen Wärme wird durch Strahlung und Konvektion auf die Katalysatorrohre übertragen, so dass das Rauchgas zwar abgekühlt, jedoch immer noch heiß in das sich dem Feuerraum anschließende Abwärmesystem des Spaltofens gelangt. Über hier angeordnete Wärmetauscher wird dem Rauchgas weiter thermische Energie entzogen, die z.B. für die Vorwärmung des zu spaltenden Ammoniaks oder zur Anwärmung von Verbrennungsluft genutzt wird, so dass es schließlich mit einer Temperatur von lediglich ca. 90 - 200°C über einen Kamin aus der Anlage geleitet werden kann.

Das Spaltgas, das die Katalysatorrohre mit einer Temperatur von typischerweise mehr als 500°C verlässt, wird ebenfalls gegen anzuwärmende Verfahrensströme abgekühlt, ehe es weiteren Behandlungsschritten unterzogen wird. Soll beispielsweise Wasserstoff als Produkt gewonnen werden, wird das abgekühlte Spaltgas u.a. durch Druckwechseladsorption zerlegt, wobei ein Wasserstoff sowie ein nicht umgesetztes Ammoniak enthaltendes Restgas anfällt, das nach Zumischung von weiterem Ammoniak verbrannt wird, um die für den Spaltofen benötigte Wärme zu liefern. Da Ammoniak eine niedrige Cetanzahl und eine niedrige Flammengeschwindigkeit besitzt, ist sein Einsatz als Brennstoff vergleichsweise schwierig und wegen seines geringen Heizwertes ist die benötigte Ammoniakmenge groß.

Die vorliegende Erfindung stellt sich die Aufgabe, ein Verfahren sowie eine Vorrichtung der gattungsgemäßen Art anzugeben, die es erlauben, Ammoniak effektiver zur Wärmeerzeugung einzusetzen, als dies nach dem Stand der Technik möglich ist.

Die gestellte Aufgabe wird verfahrensseitig erfindungsgemäß dadurch gelöst, dass zumindest ein Teil des für die Bildung des Brennstoffs vorgesehenen Ammoniaks unter Nutzung von Abwärme einer katalytisch unterstützten Spaltreaktion unterzogen wird, um ein Wasserstoff und Stickstoff umfassendes Brenngas zu erhalten, das den Brennstoff bildet oder mit wenigstens einem weiteren Stoff zum Brennstoff gemischt wird.

Durch die erfindungsgemäße Spaltung des Ammoniaks erhöhen sich sowohl die Cetanzahl und die Flammengeschwindigkeit als auch der Heizwert des gebildeten Brennstoffs gegenüber einem Brennstoff, zu dessen Bildung auf die Spaltung auch nur eines Teils des bereitgestellten Ammoniaks verzichtet wird. Der Brennstoff ist daher einfacher zu verbrennen und erlaubt es zudem, dem wärmeverbrauchenden Herstellungsverfahren Wärme auf einem höheren Temperaturniveau oder mit geringerem Brennstoffeinsatz zur Verfügung zu stellen. Weiterhin wird die Wärmeintegration gegenüber dem Stand der Technik verbessert, so dass der Energieeinsatz zur Herstellung des Produkts gesenkt wird. Zweckmäßigerweise wird die gesamte Menge des für die Bildung des Brennstoffs bereitgestellten Ammoniaks einer Spaltung in Wasserstoff und Stickstoff unterzogen.

Um den Brennstoff zu bilden, kann dem erfindungsgemäß erzeugten, Wasserstoff und Stickstoff umfassenden Brenngas zumindest ein weiterer Stoff zugemischt werden, bei dem es sich vorzugsweise um einen brennbaren und kohlenstofffreien bzw. -armen Stoff handelt, so dass durch die Verbrennung des Brennstoffs kein oder doch nur sehr wenig Kohlendioxid in die Atmosphäre freigesetzt wird. Bei einem derartigen weiteren Stoff handelt es sich beispielsweise um Ammoniak, Wasserstoff oder um ein im Verfahren anfallendes wasserstoffreiches Restgas, wie es etwa bei der Wasserstoffgewinnung durch Ammoniakspaltung oder die Dampfreformierung von Kohlenwasserstoffen erhalten wird.

Die Temperatur, bei der die Spaltreaktion durchgeführt wird (Spalttemperatur), richtet sich in erster Linie nach dem eingesetzten Katalysator sowie der Temperatur und dem Wärmeinhalt der zur Verfügung stehenden Abwärme. So ist es beispielsweise möglich, schon bei Spalttemperaturen von wenig mehr als 300°C und unter Einsatz eines teuren, Ruthenium enthaltenden Katalysators hohe Ammoniakumsätze zu generieren, während etwa ein preislich wesentlich günstigerer Katalysator auf Nickel-, Kobalt-, Eisen- oder Mischmetall-Basis erst bei Temperaturen von deutlich über 500°C ähnlich gute Ergebnisse liefert. Vorzugsweise wird der zu spaltende Teil des für die Erzeugung des Brennstoffs bereitgestellten Ammoniaks bei einer Spalttemperatur von mehr als 650°C umgesetzt.

Eine bevorzugte Ausgestaltung des erfindungsgemäßen Verfahrens sieht vor, dass als Abwärmequelle das bei der Verbrennung des Brennstoffs erzeugte Rauchgas genutzt wird, nachdem es einen Teil seines Wärmeinhalts für die Herstellung des Produkts abgegeben hat.

Eine andere Abwärmequelle stellt das unter Wärmeverbrauch erzeugte Produkt selbst dar. Bei einem solchen Produkt kann es sich beispielsweise um ein durch katalytisch unterstützte Spaltung von Ammoniak erhaltenes Spaltgas handeln, das gewöhnlich mit einer Temperatur von mehr als 500°C aus einem im Verfahren eingesetzten, unter Verwendung von Ammoniak beheizten Spaltofen abgezogen wird. Andere als Abwärmequellen nutzbare Produkte können ein in einem ammoniakbeheizten Dampfreformer erhaltenes Synthesegas oder ein Spaltgas sein, das aus Kohlenwasserstoffen in einem ebenfalls ammoniakbeheizten Spaltofen gewonnen wird. Zweckmäßigerweise wird die erfindungsgemäße Ammoniakanwärmung unter Nutzung von mehr als einer Abwärmequelle durchgeführt.

Das für die Bildung des Brennstoffs vorgesehene Ammoniak wird vorzugsweise in einem einzigen Spaltschritt umgesetzt, kann aber auch in mehreren aufeinander folgenden Spaltschritten umgesetzt werden, wobei jedem Spaltschritt ein Ammoniak enthaltender Stoffstrom zugeführt wird.

In einem Spaltschritt kann das eingesetzte Ammoniak adiabat, d.h. ohne weitere Wärmezufuhr, mit katalytischer Unterstützung umgesetzt werden. Dabei wird die für die endotherme Spaltreaktion benötigte Energie dem unter Nutzung von Abwärme angewärmt Ammoniak entzogen, so dass das erzeugte Spaltgas kälter ist als das eingesetzte Ammoniak. Bevorzugt wird das Ammoniak einem adiabaten Spaltschritt mit einer Temperatur von mehr als 300°C zugeführt.

Ein Spaltschritt kann auch isotherm durchgeführt werden, wobei dem eingesetzten Ammoniak während der katalytisch unterstützten Spaltreaktion Abwärme zugeführt wird. Ein Teil der für seine Umsetzung benötigten Wärme kann dem Ammoniak bereits vor dem isothermen Spaltschritt zugeführt werden.

Wird das für die Bildung des Brennstoffs vorgesehene Ammoniak in mehreren aufeinander folgenden Spaltschritten umgesetzt, werden vorzugsweise sämtliche Spaltschritte entweder adiabat oder isotherm durchgeführt. Nicht ausgeschlossen soll aber sein, einen Teil der Spaltschritte adiabat und die übrigen isotherm auszuführen. In den Spaltschritten können die gleichen oder unterschiedliche Katalysatoren eingesetzt werden. Vorzugsweise werden in zumindest zwei unmittelbar aufeinanderfolgenden Spaltschritten unterschiedliche, auf unterschiedlichen Temperaurniveaus betreibbare Katalysatoren verwendet, so dass für die Bereitstellung der in diesen Spaltschritten benötigten Wärmemengen Abwärmen unterschiedlicher Qualität genutzt werden können.

Zur Verringerung der insgesamt benötigten Brennstoffmenge oder zur Erreichung der für einen Spaltschritt erforderlichen Temperatur sieht eine Ausgestaltung des erfindungsgemäßen Verfahrens vor, Wärme durch regenerativ erzeugten elektrischen Strom zu erzeugen und alternativ oder zusätzlich im Spaltschritt einzusetzen. Der Einsatz des regenerativ erzeugten elektrischen Stroms kann von seiner Verfügbarkeit und/oder seinem Preis abhängig gemacht werden. So kann etwa auf den Stromeinsatz verzichtet werden, wenn die zur Verfügung stehende Strommenge einen vorgegebenen Grenzwert unterschreitet oder der Strompreis über einem Maximalwert liegt.

Vorzugsweise wird der elektrische Strom dazu verwendet, um einen Spaltschritt bei einer höheren Spalttemperatur durchzuführen, als dies allein durch die Nutzung von Abwärme möglich wäre. Da sich hierdurch der Heizwert des Brennstoffs gegenüber einer ausschließlich unter Abwärmenutzung durchgeführten Ammoniakspaltung erhöht, ist sie dazu geeignet, den Brennstoffbedarf bei gelichbleibendem Gesamtwirkungsgrad des Verfahrens zu reduzieren. Wegen der vergleichsweise niedrigen Spalttemperaturen ist der Einsatz elektrischer Energie an dieser Stelle des Verfahrens erheblich einfacher als beispielsweise in der Hochtemperaturzone eines Ammoniak-Spaltofens oder eines Dampfreformers.

Bei dem erfindungsgemäß hergestellten Produkt handelt es sich vorzugsweise um ein Wasserstoff und Stickstoff umfassendes Gasgemisch, das durch die katalytisch unterstütze Spaltung von Ammoniak erhalten wird, wobei der unter Verwendung von Ammoniak erzeugte Brennstoff verbrannt wird, um Wärme für die Spaltreaktion zu liefern.

Außerdem kann das beanspruchte Verfahren zur Herstellung von Synthesegas durch Dampfreformierung oder zum Anwärmen und/oder Schmelzen von Metallen oder Glas eingesetzt werden.

Weiterhin betrifft die Erfindung eine Vorrichtung zur wärmeverbrauchenden Herstellung eines Produkts, mit einer Anwärmeinrichtung zur Nutzung von im Verfahren anfallender Abwärme, einem Brenner, über den ein unter Verwendung von Ammoniak bildbarer Brennstoff zur Erzeugung von im Verfahren benötigter Wärme verbrannt werden kann, sowie einer mit dem Brenner verbundenen Einrichtung zur Bildung des Brennstoffs (Brennstoffbildner) .

Die gestellte Aufgabe wird vorrichtungsseitig erfindungsgemäß dadurch gelöst, dass der Brennstoffbildner einen Spaltreaktor sowie ggf. einen Brennstoffmischer umfasst, wobei der Spaltreaktor so mit der Anwärmeinrichtung verbunden ist, dass zumindest ein Teil des für die Bildung des Brennstoffs vorgesehenen Ammoniaks dem Spaltreaktor zugeführt werden kann, um unter Nutzung von Abwärme und mit katalytischer Unterstützung in ein weitgehend aus Wasserstoff und Stickstoff bestehendes Brenngas umgesetzt zu werden, das den Brennstoff bildet oder das im Brennstoffmischer mit wenigstens einem weiteren Stoff zum Brennstoff gemischt werden kann.

Vorzugsweise ist der Spaltreaktor mit genau einer Spaltstufe ausgeführt, die ein die Spaltung von Ammoniak unterstützendes Katalysatormaterial enthält. Er kann aber auch mehrere Spaltstufen umfassen, die seriell von dem zu spaltenden Ammoniak durchströmbar sind, wobei zwei unmittelbar aufeinander folgende Spaltstufen das gleiche oder unterschiedliches Katalysatormaterial enthalten. Jede Spaltstufe des Spaltreaktors ist zur Ausführung eines Spaltschritts geeignet. Der Spaltreaktor kann zumindest eine zur Ausführung eines adiabaten Spaltschritts geeignete Spaltstufe (adiabate Spaltstufe) umfassen, oder wenigstens eine Spaltstufe, mit der ein isothermer Spaltschritt möglich ist (isotherme Spaltstufe). Zweckmäßigerweise sind sämtliche Spaltstufen des Spaltreaktors entweder adiabate oder isotherme Spaltstufen. Sinnvollerweise ist zumindest stromaufwärts jeder adiabaten Spaltstufe eine Anwärmeinrichtung angeordnet, mit der das zu spaltenden Ammoniak auf eine Temperatur von mehr als 300°C anwärmbar ist.

Vorteilhaft kann eine zur Nutzung von im Verfahren anfallender Abwärme dienende Anwärmeinrichtung als isotherme Spaltstufe ausgeführt sein. In derartigen Anwärmeinrichtungen wird das Ammoniak gewöhnlich durch Rohre geführt und dabei in indirektem Wärmetausch mit einem an den Rohraußenflächen entlanggeführten Wärmeträger angewärmt. Das für die Ammoniakspaltung erforderliche Katalysatormaterial ist zweckmäßigerweise in einem oder mehreren der Rohre der Anwärmeinrichtung angeordnet, so dass der Spaltschritt unter Wärmezufuhr durchgeführt werden kann.

In einer bevorzugten Ausgestaltung umfasst die erfindungsgemäße Vorrichtung zumindest eine elektrischen Heizeinrichtung, über die dem in einer Spaltstufe umzusetzenden Ammoniak thermische Energie zugeführt werden kann.

Eine besonders bevorzugte Variante der erfindungsgemäßen Vorrichtung weist einen mit dem Brenner beheizbaren Spaltofen auf, mit dem Ammoniak mit katalytischer Unterstützung gespalten werden kann, um ein weitgehend aus Wasserstoff und Stickstoff bestehendes Spaltgas als Produkt zu erhalten. Alternativ kann die erfindungsgemäße Vorrichtung auch einen mit dem Brenner beheizbaren Dampfreformer oder einen Ofen umfasst, in dem Stahl oder Glas angewärmt und/oder geschmolzen werden kann.

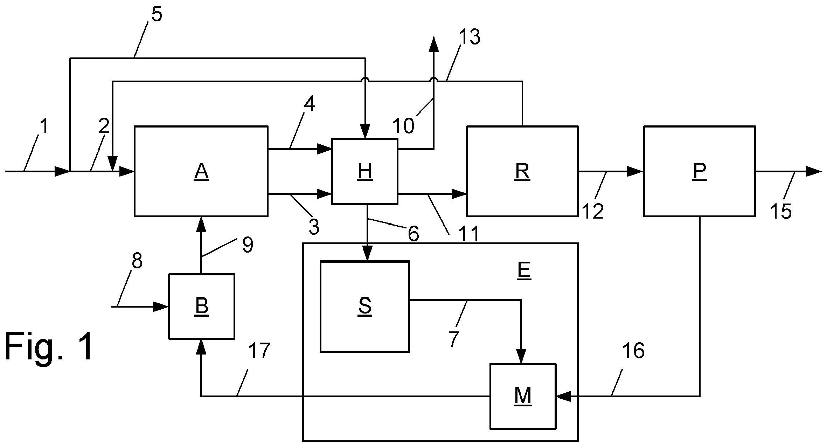

Im Folgenden soll die Erfindung anhand eines in der Figur 1 schematisch dargestellten Ausführungsbeispiels näher erläutert werden.

Die Figur 1 zeigt die Herstellung eines weitgehend aus Wasserstoff und Stickstoff bestehenden Spaltgases aus Ammoniak unter Einsatz eines erfindungsgemäß beheizten Ammoniak-Spaltofens.

Von dem über Leitung 1 zugeführten Ammoniak wird ein erster Teilstrom 2 abgetrennt und dem durch wenigstens einen Brenner B beheizten Ammoniak-Spaltofen A als Einsatz zugeführt, um bei Temperaturen von bis zu 1000°C in einer endothermen Reaktion mit katalytischer Unterstützung zu einem weitgehend aus Wasserstoff und Stickstoff bestehenden, Reste nicht umgesetzten Ammoniaks sowie Wasser enthaltenden Spaltgas 3 umgesetzt zu werden. Zur Nutzung ihres Wärmeinhalts werden das heiße Spaltgas 3 sowie das bei der Ammoniakspaltung abgekühlte Rauchgas 4 des Brenners B in die Anwärmeinrichtung H eingeleitet, wo sie dazu verwendet werden, um einen zweiten Ammoniakteilstrom 5 auf eine Temperatur von mehr als 300°C anzuwärmen und einen angewärmten Ammoniakstrom 6 zu erhalten. Dem angewärmten Ammoniakstrom 6 kann vorzugsweise unter Nutzung regenerativ erzeugten elektrischen Stroms weitere Wärme zugeführt werden (nicht dargestellt), so dass er mit einer Temperatur zwischen 300 und 650°C in den zum Brennstoffbildner E gehörenden Spaltreaktor S eintritt, wo er in wenigstens einem vorzugsweise adiabat ausgeführten Spaltschritt mit katalytischer Unterstützung in ein Wasserstoff und Stickstoff umfassendes Brenngas 7 umgesetzt wird. In dem ebenfalls zum Brennstoffbildner E gehörenden Brennstoffmischer M wird das Brenngas 7 mit einen weiteren Gas 16 zum Brennstoff 17 gemischt, der über den Brenner B mit Luft oder mit Sauerstoff angereicherter Luft 8 zu einem heißen Rauchgas 9 umgesetzt wird, das zur Beheizung des Ammoniak-Spaltofens A dient.

Das in der Anwärmeinrichtung H abgekühlte Rauchgas 10 wird in die Atmosphäre entlassen, während das ebenfalls abgekühlte Spaltgas 11 in die Gasreinigung R weitergeführt wird, wo der größte Teil des enthaltenen Ammoniaks abgetrennt wird, um Rohwasserstoff 12 zu gewinnen. Während das abgetrennte Ammoniak über Leitung 13 vor den Ammoniak-Spaltofen A zurückgeführt wird, wird der Rohwasserstoff 12 in den Druckwechseladsorber P weitergeleitet und in Reinwasserstoff 15 sowie ein weitgehend aus Wassersoff, Stickstoff und Ammoniak bestehendes Restgas 16 getrennt, das im Brennstoffmischer M dem Brenngas 7 zugemischt wird.

## Patentansprüche

1. Verfahren zur wärmeverbrauchenden Herstellung eines Produkts (3), wobei Abwärme anfällt und ein unter Verwendung von Ammoniak gebildeter Brennstoff (17) verbrannt wird, um im Verfahren benötigte Wärme zu erzeugen, **dadurch gekennzeichnet, dass** zumindest ein Teil (5) des für die Bildung des Brennstoffs (17) vorgesehenen Ammoniaks unter Nutzung von Abwärme (H) einer katalytisch unterstützten Spaltreaktion unterzogen wird, um ein Wasserstoff und Stickstoff umfassendes Brenngas (7) zu erhalten, das den Brennstoff bildet oder mit wenigstens einem weiteren Stoff (16) zum Brennstoff (17) gemischt wird.

2. Verfahren nach Anspruch 1, **dadurch gekennzeichnet, dass** dem Brenngas (7) zur Bildung des Brennstoffs (17) Ammoniak, Wasserstoff oder ein im Verfahren anfallendes wasserstoffreiches Restgas (16) zugemischt wird.

3. Verfahren nach einem der Ansprüche 1 oder 2, **dadurch gekennzeichnet, dass** die katalytisch unterstütze Umsetzung des Ammoniaks (6) bei einer Temperatur von mehr als 300, bevorzugt mehr 650°C durchgeführt wird.

4. Verfahren nach einem der Ansprüche 1 bis 3, **dadurch gekennzeichnet, dass** die katalytisch unterstütze Umsetzung des Ammoniaks (6) in genau einem adiabat oder isotherm ablaufenden Spaltschritt durchgeführt wird.

5. Verfahren nach einem der Ansprüche 1 oder 2, **dadurch gekennzeichnet, dass** die katalytisch unterstütze Umsetzung des Ammoniaks (6) in wenigstens zwei aufeinanderfolgenden Spaltschritten durchgeführt wird.

6. Verfahren nach Anspruch 4, **dadurch gekennzeichnet, dass** in zwei unmittelbar aufeinanderfolgenden Spaltschritten das gleiche oder unterschiedliches Katalysatormaterial eingesetzt wird.

7. Verfahren nach einem der Ansprüche 1 bis 6, **dadurch gekennzeichnet, dass** jeder Spaltschritt unter Nutzung von regenerativ erzeugtem elektrischem Strom und/oder Abwärme (H) durchgeführt wird.

8. Verfahren nach einem der Ansprüche 1 bis 7, **dadurch gekennzeichnet, dass** es sich bei dem Produkt (3) um ein Wasserstoff und Stickstoff umfassendes Gasgemisch handelt, das durch die katalytisch unterstütze Spaltung von Ammoniak erhalten wird, oder um Synthesegas oder angewärmten Stahl oder geschmolzenes Glas.

9. Vorrichtung zur wärmeverbrauchenden Herstellung eines Produkts (3), mit einer Anwärmeinrichtung (H) zur Nutzung von im Verfahren anfallender Abwärme, einem Brenner (B), über den ein unter Verwendung von Ammoniak bildbarer Brennstoff (17) zur Erzeugung von im Verfahren benötigter Wärme verbrannt werden kann, sowie einer mit dem Brenner (B) verbundenen Einrichtung (E) zur Bildung des Brennstoffs, **dadurch gekennzeichnet, dass** die Einrichtung (E) zur Bildung des Brennstoffs (17) einen Spaltreaktor (S) sowie ggf. einen Brennstoffmischer (M) umfasst, wobei der Spaltreaktor (S) so mit der Anwärmeinrichtung (H) verbunden ist, dass zumindest ein Teil (5) des für die Bildung des Brennstoffs (17) vorgesehenen Ammoniaks dem Spaltreaktor (S) zugeführt werden kann, um unter Nutzung von Abwärme und mit katalytischer Unterstützung in ein weitgehend aus Wasserstoff und Stickstoff bestehendes Brenngas (7) umgesetzt zu werden, das den Brennstoff bildet oder das im Brennstoffmischer (M) mit wenigstens einem weiteren Stoff (16) zum Brennstoff (17) gemischt werden kann.

10. Vorrichtung nach Anspruch 9, **dadurch gekennzeichnet, dass** der Spaltreaktor (S) genau eine Spaltstufe umfasst.

11. Vorrichtung nach Anspruch 9, **dadurch gekennzeichnet, dass** der Spaltreaktor (S) mehrere Spaltstufen umfasst, die seriell von dem zu spaltenden Ammoniak durchströmbar sind.

12. Vorrichtung nach Anspruch 11, **dadurch gekennzeichnet, dass** zwei unmittelbar aufeinander folgende Spaltstufen das gleiche oder unterschiedliches Katalysatormaterial enthalten.

13. Vorrichtung nach einem der Ansprüche 9 bis 12, **dadurch gekennzeichnet, dass** sie zumindest eine elektrischen Heizeinrichtung umfasst, über die dem in einer Spaltstufe umzusetzenden Ammoniak thermische Energie zuführbar.

14. Vorrichtung nach einem der Ansprüche 9 bis 13, **dadurch gekennzeichnet, dass** sie einen mit dem Brenner (B) beheizbaren Spaltofen (A) umfasst, mit dem Ammoniak mit katalytischer Unterstützung gespalten werden kann, um ein weitgehend aus Wasserstoff und Stickstoff bestehendes Spaltgas (3) als Produkt zu erhalten.

15. Vorrichtung nach einem der Ansprüche 9 bis 13, **dadurch gekennzeichnet, dass** sie einen mit dem Brenner beheizbaren Ofen umfasst, in dem Stahl oder Glas angewärmt und/oder geschmolzen werden kann.
